(19) Europäisches Patentamt
European Patent Office
Office européen des brevets

(11) EP 4 163 321 A1

(12) EUROPEAN PATENT APPLICATION
published in accordance with Art. 153(4) EPC

(43) Date of publication:
12.04.2023 Bulletin 2023/15

(21) Application number: 21821615.8

(22) Date of filing: 31.05.2021

(51) International Patent Classification (IPC):
*C08G 69/48* (2006.01) *C08K 5/29* (2006.01)
*C08L 77/02* (2006.01) *D01F 6/60* (2006.01)

(52) Cooperative Patent Classification (CPC):
C08G 69/48; C08K 5/29; C08L 77/02; D01F 6/60

(86) International application number:
PCT/JP2021/020680

(87) International publication number:
WO 2021/251192 (16.12.2021 Gazette 2021/50)

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
KH MA MD TN

(30) Priority: 09.06.2020 JP 2020100143

(71) Applicant: Kureha Corporation
Chuo-ku
Tokyo 103-8552 (JP)

(72) Inventors:
- MOKUDAI, Haruki
Tokyo 103-8552 (JP)
- WATANABE, Takahiro
Tokyo 103-8552 (JP)
- SUZUKI, Yoshinori
Tokyo 103-8552 (JP)

(74) Representative: Hoefer & Partner Patentanwälte mbB
Pilgersheimer Straße 20
81543 München (DE)

# (54) POLYAMIDE RESIN COMPOSITION, MOLDED POLYAMIDE RESIN ARTICLE, AND PRODUCTION METHOD THEREFOR

(57) A decrease in molecular weight in molding of a polyamide is suppressed. A polyamide resin composition of the present invention includes: a polyamide having a structural unit containing an alkylene group having 1 to 3 carbon atoms and an amide bond; and a compound having a cyclic structure in which first nitrogen and second nitrogen of a carbodiimide group are bonded by a bonding group. A molded polyamide resin article is produced by molding of the polyamide resin composition through heat pressurization.

EP 4 163 321 A1

**Description**

**TECHNICAL FIELD**

The present invention relates to a polyamide resin composition, a molded article of a polyamide resin, and a production method therefor.

**BACKGROUND ART**

Polyamides are expected to be used in various applications. For example, polyamide 4 is expected to be put into practical use as a bioplastic. However, a melting temperature (270°C) and a decomposition temperature (265°C) of the polyamide 4 are close to each other, and thus molding by melt processing is difficult. In such a situation, there is known a method of improving heat resistance and suppressing thermal decomposability of the polyamide 4 by modifying a terminal end of the polyamide 4, as a technique for enhancing processability of the polyamide 4 (for example, see Patent Document 1).

Further, as a technique for enhancing processability of a polyamide, there is known a technique of molding polyamide 6 by a melting reaction thereof in the presence of a cyclic carbodiimide (see, for example, Patent Document 2).

**CITATION LIST**

Patent Document

Patent Document 1: JP 2013-60486 A
Patent Document 2: JP 2010-285557 A

**SUMMARY OF INVENTION**

Technical Problem

However, in a known molding method using the polyamide 4 as a material, molding by melt processing may decrease a molecular weight of a molded article. In this way, there is a room for investigation from the perspective of suppressing a decrease in molecular weight in molding of a polyamide, in known techniques.

An aspect of the present invention is to suppress a decrease in molecular weight in molding of a polyamide.

**SOLUTION TO PROBLEM**

In order to solve the problem described above, a polyamide resin composition according to an aspect of the present invention includes: a polyamide having a structural unit containing an alkylene group having 1 to 3 carbon atoms and an amide bond; and a compound having a cyclic structure in which first nitrogen and second nitrogen of a carbodiimide group are bonded by a bonding group. Note that, in the present specification, the wording "from A to B" represents a range including numerical values on both ends (i.e., a range of A or greater and B or less).

Further, in order to solve the problem described above, a molded polyamide resin article according to an aspect of the present invention is obtained by molding the polyamide resin composition described above through melt processing.

Further, in order to solve the problem described above, a method for producing a molded polyamide resin article according to an aspect of the present invention includes melt processing the polyamide resin composition described above.

**Advantageous Effects of Invention**

According to an aspect of the present invention, it is possible to suppress a decrease in molecular weight in molding of a polyamide.

**DESCRIPTION OF EMBODIMENTS**

The present invention will be described in detail below.

[Polyamide resin composition]

A polyamide resin composition according to an embodiment of the present invention includes: a polyamide having a structural unit containing an alkylene group having 1 to 3 carbon atoms and an amide bond; and a compound (hereinafter also referred to as "cyclic carbodiimide") having a cyclic structure in which first nitrogen and second nitrogen of a carbodiimide group are bonded by a bonding group. Hereinafter, among the polyamides as described above, "polyamide 4" in which an alkylene group linking amide bonds has 3 carbon atoms will be mainly described as an example.

[Polyamide]

The polyamide according to the present embodiment is a polymer compound having a structure represented by -CONH-. More specifically, the polyamide in the present embodiment has a structural unit containing an alkylene group having 1 to 3 carbon atoms and amide bonds linked via the alkylene group. The number of carbon atoms in a main chain in the structural unit of the polyamide is 4 or less, and such a polyamide is also referred to as polyamide 4.

(Structure of polyamide)

The structure of the polyamide can be appropriately determined from the perspective of desired physical properties according to an application of a molded article of the polyamide resin composition.

The number of carbon atoms in the alkylene group in the structural unit of the polyamide is from 1 to 3. The number of carbon atoms in the alkylene group may be identical or different in the structural units. In addition, the alkylene group may be linear or branched. A polyamide having 3 carbon atoms is a so-called polyamide 4, and is preferred from the perspective of reducing an environmental burden due to the molded article because it has biodegradability.

Also, a site constituting an amide bond should be contained in one structural unit so as to form one or more amide bonds. For example, the site having an amide bond may be "-CONH-" in one structural unit, or may be a pair of "-CO-" and "-NH-" located at the respective terminal ends of one structural unit.

(Weight average molecular weight of polyamide)

A weight average molecular weight (Mw) of the polyamide described above can be appropriately determined as long as the effects of the present embodiment can be achieved. The Mw of the polyamide may be, for example, 10,000 or greater, 20,000 or greater, or 30,000 or greater. In addition, from the perspectives described above, the Mw of the polyamide may be 800,000 or less, 600,000 or less, 300,000 or less, 200,000 or less, or 100,000 or less. The Mw of the polyamide can be determined by a known technique such as gel permeation chromatography (GPC).

(Method of obtaining polyamide)

Note that the polyamide described above may be a commercially available product or a synthetic product according to a known technique.

For example, the polyamide can be synthesized by polymerizing an organic compound having an appropriate lactam structure such as pyrrolidone, through a ring-opening reaction, using a specific ester compound as a polymerization initiator, in the presence of a basic catalyst. The specific ester compound as a polymerization initiator is, for example, an ester compound of a fatty acid having an alkyl group of the terminal end group described above and a secondary alcohol. As the synthesis of the polyamide of the present embodiment, synthesis of the polyamide by self-condensing an amino acid, synthesis of the polyamide by a condensation reaction of a diamine and a dicarboxylic acid, and the like can also be used.

(method for producing polyamide)

Note that the polyamide described above may be a commercially available product or a synthetic product according to a known technique. A preferred method for producing a polyamide in the present embodiment includes the following methods. The preferred production method includes polymerizing a monomer having a lactam structure using a fatty acid ester as a polymerization initiator. Examples of the polymerization initiator include tert-butyl acetate, butyl acetate, and isobutyl acetate. From the perspective of suppressing a side reaction of the polymerization, the polymerization initiator is particularly preferably tert-butyl acetate.

[Cyclic carbodiimide]

In the present embodiment, a cyclic carbodiimide (hereinafter also referred to as "cyclic CDI") has a cyclic structure in which first nitrogen and second nitrogen of a carbodiimide group are bonded by a bonding group. An overall structure and a ring structure of the cyclic carbodiimide can be appropriately determined as long as a decrease in molecular weight in the molding of the polyamide 4 is suppressed. The cyclic carbodiimide may be one or more kinds, and may be, for example, the cyclic carbodiimide described in Patent Document 2. The cyclic carbodiimide can be represented, for example, by Formula (I) below.

[Formula 1]

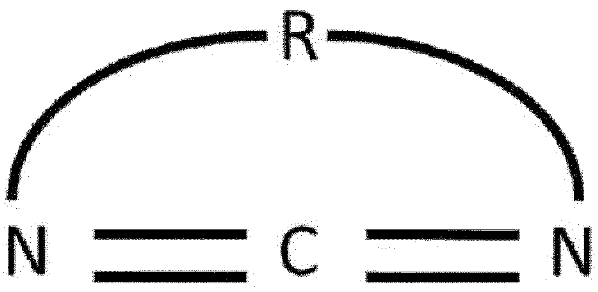

(I)

In Formula (I), R is one or more divalent bonding groups selected from the group consisting of aliphatic groups, alicyclic groups, and aromatic groups. In Formula (I), R may contain one or more heteroatoms. Examples of the heteroatom include oxygen (O), nitrogen (N), sulfur (S), and phosphorus (P). Further, R may contain a ring structure, and the ring structure may contain a carbodiimide structure. The kind and number of atoms constituting a main chain of the cyclic structure can be appropriately determined as long as the effects of the present embodiment can be achieved. For example, the number of atoms directly constituting the cyclic structure is preferably 8 or greater, and more preferably 10 or greater, from the perspective of suppressing a decrease in molecular weight during molding. Furthermore, the number of atoms is preferably 50 or less, and more preferably 20 or less, from the perspective of expressing expected effects resulting from the polyamide.

Further, R may further have a monovalent substituent as long as the effects of the present embodiment can be achieved.

More specifically, R may be a di- to tetra-valent aliphatic group having 1 to 20 carbon atoms, a di- to tetra-valent alicyclic group having 3 to 20 carbon atoms, a di- to tetra-valent aromatic group having 5 to 15 carbon atoms, or a combination thereof. Examples of the combination include alkylene-arylene groups in which an alkylene group and an arylene group are bonded.

Examples of the aliphatic group in R include alkylene groups having 1 to 20 carbon atoms, alkanetriyl groups having 1 to 20 carbon atoms, and alkanetetrayl groups having 1 to 20 carbon atoms.

Examples of the alkylene groups include a methylene group, an ethylene group, a propylene group, a butylene group, a pentylene group, a hexylene group, a heptylene group, an octylene group, a nonylene group, a decylene group, a dodecylene group, and a hexadecylene group.

Examples of the alkanetriyl groups include a methanetriyl group, an ethanetriyl group, a propanetriyl group, a butanetriyl group, a pentanetriyl group, a hexanetriyl group, a heptanetriyl group, an octanetriyl group, a nonanetriyl group, a decanetriyl group, a dodecanetriyl group, and a hexadecanetriyl group.

Examples of the alkanetetrayl groups include a methanetetrayl group, an ethanetetrayl group, a propanetetrayl group, a butanetetrayl group, a pentanetetrayl group, a hexanetetrayl group, a heptanetetrayl group, an octanetetrayl group, a nonanetetrayl group, a decanetetrayl group, a dodecanetetrayl group, and a hexadecanetetrayl group.

Examples of the alicyclic group in R include cycloalkylene groups having 3 to 20 carbon atoms, cycloalkanetriyl groups having 3 to 20 carbon atoms, and cycloalkanetetrayl groups having 3 to 20 carbon atoms.

Examples of the cycloalkylene groups include a cyclopropylene group, a cyclobutylene group, a cyclopentylene group, a cyclohexylene group, a cycloheptylene group, a cyclooctylene group, a cyclononylene group, a cyclodecylene group, a cyclododecylene group, and a cyclohexadecylene group.

Examples of the cycloalkanetriyl groups include a cyclopropanetriyl group, a cyclobutanetriyl group, a cyclopentanetriyl group, a cyclohexanetriyl group, a cycloheptanetriyl group, a cyclooctanetriyl group, a cyclononanetriyl group, a cyclodecanetriyl group, a cyclododecanetriyl group, and a cyclohexadecanetriyl group.

Examples of the cycloalkanetetrayl groups include a cyclopropanetetrayl group, a cyclobutanetetrayl group, a cyclopentanetetrayl group, a cyclohexanetetrayl group, a cycloheptantetrayl group, a cyclooctanetetrayl group, a cyclononanetetrayl group, a cyclodecanetetrayl group, a cyclododecanetetrayl group, and a cyclohexadecanetetrayl group.
Examples of the aromatic group in R include arylene groups having 5 to 15 carbon atoms, arenetriyl groups having 5 to 15 carbon atoms, and arenetetrayl groups having 5 to 15 carbon atoms. The aromatic group may contain one or more heteroatoms.
Examples of the arylene groups include a phenylene group and a naphthalenediyl group.
Examples of the arenetriyl group (trivalent) include a benzenetriyl group and a naphthalenetriyl group.
Examples of the arenetetrayl groups (tetravalent) include a benzenetetrayl group and a naphthalenetetrayl group.
Examples of the substituent that R may have include alkyl groups having 1 to 20 carbon atoms, aryl groups having 6 to 15 carbon atoms, halogen atoms, nitro groups, amide groups, hydroxyl groups, ester groups, ether groups, and aldehyde groups.
Examples of the cyclic carbodiimide described above can include a compound represented by Formula (II) or Formula (III) below.

[Formula 2]

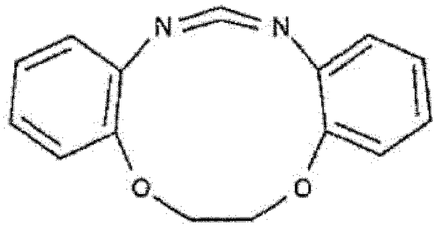

(II)

[Formula 3]

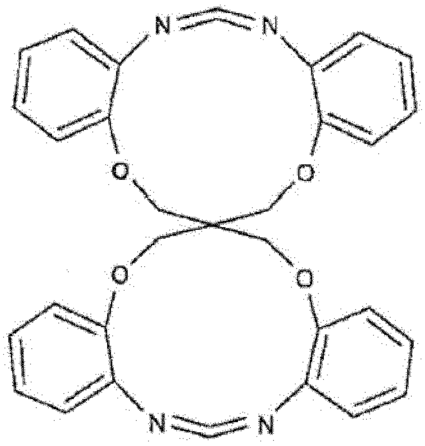

(III)

[Composition of polyamide resin composition]

Both a content of the polyamide and a content of the cyclic carbodiimide in the polyamide resin composition can be appropriately determined depending on the application of the polyamide resin composition (or the molded article obtained from the composition). The polyamide resin composition tends to more strongly reflect physical properties of the polyamide as the polyamide content thereof is higher. Furthermore, as the cyclic carbodiimide content of the polyamide resin composition is higher, decrease in the molecular weight of the molded article obtained later tends to be suppressed more, or the molecular weight tends to be increased more.
The cyclic carbodiimide content of the polyamide resin composition of the present embodiment may be 10 mass% or less, from the perspective of maintaining physical properties such as crystallinity or toughness. Furthermore,

the cyclic carbodiimide content of the polyamide resin composition is preferably 5 mass% or less, more preferably 4 mass% or less, and even more preferably 3 mass% or less, from the perspective of allowing the molded article to sufficiently express the properties of the polyamide such as crystallinity or toughness. Furthermore, the cyclic carbodiimide content of the molded polyamide resin article may be 3.0 mass% or less, from the perspective of suppressing a deterioration in moldability or physical properties due to gelation.

Furthermore, the cyclic carbodiimide content of the polyamide resin composition is preferably 0.1 mass% or greater, more preferably 0.3 mass% or greater, and even more preferably 0.5 mass% or greater from the perspective of sufficiently suppressing the decrease in molecular weight in the molded article.

In a case where the polyamide is polyamide 4, the cyclic carbodiimide content of the polyamide resin composition may be appropriately determined from a range from 0.5 to 5 mass%, from the perspective of sufficiently enhancing mechanical strength in the molded article.

The cyclic carbodiimide content of the polyamide resin composition is presumed to affect the number of crosslinked structures in the molded article obtained from the polyamide resin, and is a factor to determine the physical properties of the molded article. For example, it is presumed that suppressing the decrease in molecular weight or increasing the molecular weight in the molded article results from the number of crosslinked structures in the molded article. On the other hand, when the cyclic carbodiimide content of the polyamide resin composition is increased, for example, the properties (e.g., crystallinity or toughness) of the polyamide contained in the molded article can be reduced. Therefore, the cyclic carbodiimide content may be appropriately determined depending on the application of the molded article.

Note that the polyamide content of the polyamide resin composition may be an amount obtained by subtracting the cyclic carbodiimide content from an amount of the polyamide resin composition. In a case where the polyamide resin composition further contains an additional component which will be described below, the polyamide content may be an amount obtained by subtracting an amount of the cyclic carbodiimide and an amount of the additional component from the amount of the polyamide resin composition.

(Preparation method)

The polyamide resin composition of the present embodiment may be prepared by mixing the polyamide described above and the cyclic carbodiimide described above. The mixing can be carried out using a known technique, and can be carried out, for example, using a mixer such as a tumbler, a V-type blender, a Nauta mixer, a Banbury mixer, a kneading roll, or an extruder. As long as the effects of the present embodiment can be achieved, a part of the cyclic carbodiimide in the polyamide resin composition may be reacted.

[Additional component]

The polyamide resin composition according to the present embodiment may further contain an additional component other than the polyamide 4 and cyclic carbodiimide described above as long as the effects of the present embodiment can be achieved. The additional component may be one or more kinds, examples of which include reinforcing agents, plasticizers, lubricants and stabilizers. The additional component is appropriately used as long as the effects of the additional component are further expressed.

[molded article]

The molded polyamide resin article according to an embodiment of the present invention is a molded article obtained by melt processing the polyamide resin composition described above. The molded polyamide resin article may be a molded article obtained according to a known resin molding method involving melt processing, where the polyamide resin composition described above is used as a raw material. The molded polyamide resin article may be, for example, an injection molded article, an extrusion molded article, a press molded article, or a blow molded article of the polyamide resin composition described above. The molded polyamide resin article of the present embodiment is obtained by using the polyamide resin composition described above as a raw material, and thus is preferably a molded article obtained by melt processing including melt kneading, which is likely to decrease the molecular weight during molding, from the perspective of achieving a more pronounced effect of suppressing the decrease in molecular weight.

Furthermore, a form of the molded polyamide resin article is not limited, and may be a variety of forms obtained from a heat pressurized polyamide resin composition. Examples of the form of the molded polyamide resin article include monofilaments.

The monofilament is obtained by spinning a melt kneaded product of the polyamide resin composition. A size of the monofilament can be determined as appropriate as long as the monofilament can be produced by the spinning. For example, a fiber diameter of the monofilament may be 10 μm or greater and 1000 μm or less.

(Reaction product)

The molded polyamide resin article of the present embodiment contains a reaction product of the cyclic carbodiimide described above. Here, the "reaction product of the cyclic carbodiimide" is a product obtained by reaction of the cyclic carbodiimide under conditions of heat pressurization when the molded polyamide resin article is produced, and is, for example, a compound obtained by chemically bonding the cyclic carbodiimide and the polyamide or a compound obtained by chemically bonding the cyclic carbodiimides. Normally, the reaction product is uniformly dispersed in the molded polyamide resin article, but may be ununiformly present as long as the effects of the present embodiment can be achieved.

In the present embodiment, the polyamide resin composition sufficiently contains the reaction product, thereby sufficiently suppressing the molecular weight of the molded polyamide resin article from being lower than the molecular weight of the polyamide. In this way, from the perspective of sufficiently suppressing the decrease in molecular weight of the molded polyamide resin article, the cyclic carbodiimide content of the molded polyamide resin article is preferably 0.1 mass% or greater, more preferably 0.3 mass% or greater, and even more preferably 0.5 mass% or greater. Furthermore, the cyclic carbodiimide content of the molded polyamide resin article may be 10 mass% or less from the perspective of maintaining the physical properties such as crystallinity or toughness, and further may be 3.0 mass% or less from the perspective of suppressing the deterioration in moldability or physical properties due to gelation.

Note that the cyclic carbodiimide content of the molded polyamide resin article is an amount of the cyclic carbodiimide added when the cyclic carbodiimide is mixed with the polyamide, in the polyamide resin composition.

(Branching parameter g value)

In the present embodiment, a branching parameter value (hereinafter, also referred to as "g value") of the molded polyamide resin article in a molecular weight of 100,000 is preferably 1 or less. In the present embodiment, the molded polyamide resin article contains the reaction product described above, and thus may have a polymer having a high degree of branching as compared with a molded article composed substantially of the polyamide. Therefore, the decrease in molecular weight of the polyamide in the melt processing treatment is suppressed, and elasticity in a molten state is further enhanced. The imparted and improved elasticity in a molten state described above may be expressed as "stiffness", for example.

For example, the g value of the molded polyamide resin article in a molecular weight of 100,000 is more preferably 0.9 or less, and even more preferably 0.8 or less, from the perspective of enabling molding of various forms and sufficiently enhancing the stiffness in a molten state in the molding of various forms.

Furthermore, for example, from the perspective of enabling spinning even using, as a material, PA4 that cannot be spun under certain conditions, the above-described g value is preferably 0.9 or less, more preferably 0.85 or less, and even more preferably 0.8 or less. Furthermore, for example, from the perspective of enabling spinning using PA4 under the same conditions as those under which spinning cannot be carried out using PA6, the above-described g value is preferably 0.85 or less, more preferably 0.8 or less, and even more preferably 0.75 or less.

On the other hand, from the perspective that, if the amount of the cyclic carbodiimide is too large, the moldability or physical properties would be impaired due to gelation, the g value of the molded polyamide resin article may be 0.5 or greater.

The branching parameter (g value) representing the molecular structure of the molded polyamide resin article after the reaction of the cyclic carbodiimide can be determined from the following equation using a mean square radius of gyration as measured by a gel permeation chromatography-multi angle light scattering detector (GPC-MALS). Here, the "$\langle S^2 \rangle_{branched}$" refers to a mean square radius of gyration of a cyclic carbodiimide-containing polyamide composition containing a branched polymer, and the "$\langle S^2 \rangle_{linear}$" is a mean square radius of gyration of a polyamide resin, which is a linear polymer.

(Equation 1)

$$g = \langle S^2 \rangle_{branched} / \langle S^2 \rangle_{linear}$$

The g value described above can be controlled by, for example, the cyclic CDI content. The g value tends to be higher by reducing the cyclic CDI content.

(Arithmetic mean roughness)

An arithmetic mean roughness of the molded polyamide resin article of the present embodiment may be 1.0 μm or less. In the producing process of the molded polyamide resin article, a melted polyamide resin must be cooled, and may be cooled by water when quenching is desired. In particular, when the monofilament is produced, water cooling may be performed, but, when the molded polyamide resin article immediately after molding is cooled by water, the surface thereof may be roughened. However, when the melted polyamide resin has enough stiffness due to the addition of the cyclic CDI, air cooling can be employed instead of water cooling, and consequently, the surface roughness caused by water cooling can be suppressed or prevented. When the form of the molded article is a monofilament, it is possible to improve appearance, such as gloss or transparency, of the monofilament and a fiber formed by an assembly of the monofilaments, or to enhance the strength such as tensile strength. From the perspective of achieving such an effect, the arithmetic mean roughness of the molded polyamide resin article is preferably smaller, more preferably 0.5 μm or less, and even more preferably 0.3 μm or less.

A surface roughness of the molded polyamide resin article can be determined by a known surface roughness measurement method according to the form of the molded polyamide resin article.

The tensile strength of the molded polyamide resin article is preferably 0.5 GPa or greater, and more preferably 0.55 GPa or greater, from the perspective that the molded polyamide resin article has sufficiently high mechanical strength. The tensile strength of the molded polyamide resin article can be measured by a known method.

[method for producing molded polyamide resin article]

The method for producing a molded polyamide resin article in the present embodiment includes melt processing the polyamide resin composition described above. The melt processing can be performed, for example, by heating and pressurizing the polyamide resin composition. The heating in the melt processing should increase the temperature of the polyamide resin composition to a temperature sufficient to melt the polyamide resin composition. For pressurization, a pressure sufficient to mold a molten product of the polyamide resin composition into a desired shape should be applied to the polyamide resin composition. The temperature and pressure in the melt processing can be appropriately determined depending on the form of the polyamide resin product.

In the method for producing a polyamide resin composition, the melt processing described above preferably includes melt kneading the polyamide resin composition at 250°C or higher, and more preferably 260°C or higher, from the perspective of sufficiently melting the polyamide resin composition. In addition, the melt processing described above preferably includes melt kneading the polyamide resin composition at 320°C or lower, more preferably 300°C or lower, and even more preferably 280°C or lower, from the perspective of suppressing thermal decomposition of the polyamide resin. By performing such melt kneading, it is possible to further enhance the stiffness of the melted polyamide resin. This is presumed to be because the reaction products of the polyamide and the cyclic carbodiimide are moderately entangled with each other to construct more complex three-dimensional structures. When the temperature described above is lower than 250°C, melting of the polyamide resin composition may be insufficient, and, when the temperature exceeds 320°C, the spinning may be difficult due to the thermal decomposition of the polyamide resin.

The melt kneading can be carried out using a known apparatus used in kneading a resin composition, such as an extruder type or pressure melter type melt extruder.

An excessively short treatment time of the melt kneading may lead to insufficient kneading, and an excessively long treatment time may lead to excessive progression of the decomposition of the resin composition. The treatment time of the melt kneading may be from 1 to 3 minutes, for example, in a range where a substantially uniform kneaded product can be obtained by sufficient kneading, as long as the melt kneading is performed in the temperature range described above using polyamide 4 as the polyamide.

Furthermore, the melt kneaded product may be transported using a fluid transport apparatus that permits a high outlet pressure, such as a gear pump. The gear pump is preferred from the perspective that it is excellent in quantitativity and quantitatively transports the melt kneaded product. On the other hand, the gear pump has a long staying time, and thus may be more likely to cause thermal decomposition when used for a resin composition of a polyamide. However, in the present embodiment, the polyamide resin composition contains a cyclic carbodiimide, and thus it is possible to suppress the influence of the thermal decomposition on the molded article as described above. The use of a gear pump having high quantitativity in the molding of the polyamide resin composition is preferred, from the perspective of enhancing the productivity in the production of the molded polyamide resin article and reducing a yield of the molded polyamide resin article. In this way, the method for producing a molded polyamide resin article in the present embodiment may further include transporting the melt kneaded polyamide resin composition using a gear pump.

Further, the method for producing a molded polyamide resin article in the present embodiment may further include spinning the melt kneaded polyamide resin composition. The spinning can be performed by installing a known nozzle for spinning at a discharge port of an extruder which can perform melt kneading. The above-described melt

kneaded product has further improved stiffness. Therefore, it is possible to produce monofilaments suitable for performing drawing after discharging.

Furthermore, the method for producing a molded polyamide resin article in the present embodiment may further include air cooling the filament produced in the spinning. The air cooling step can be carried out by drawing the produced filament in a gas phase. The temperature in the gas phase may be appropriately set, and may be, for example, from 0 to 100°C. The air cooling step prevents hydrolysis of the molded article (filament) at a surface thereof and dissolution thereof in water during water cooling, as compared with a filament cooled by water, thereby making it possible to prevent surface roughness caused by water cooling.

[Effect]

The polyamide resin composition of the present embodiment contains a cyclic carbodiimide as described above. The cyclic carbodiimide has sufficiently good affinity for a molten polyamide. In addition, in melt processing during molding of the polyamide resin composition, the cyclic carbodiimide can be reacted and bonded to the polyamide or to another cyclic carbodiimide. Therefore, it is presumed that the reaction product of the cyclic carbodiimide moderately forms a complex three-dimensional structure in the molded article, and suppresses the decrease in molecular weight of the polyamide.

The molded polyamide resin article of the present embodiment is produced by molding through heat pressurization of the polyamide resin composition as described above. It is presumed that a three-dimensional structure of the reaction product of the cyclic carbodiimide in the molded polyamide resin article is constructed by the heat pressurization. As a result, the mechanical strength of the molded polyamide resin article increases, and the decrease in molecular weight of the molded polyamide resin article by molding is substantially equal to or greater than the molecular weight of the polyamide in the polyamide resin composition.

In the method for producing a molded polyamide resin article according to the present embodiment, the molded polyamide resin article described above, or a molded polyamide resin article having improved physical properties, can be produced. For example, it is possible to enhance the stiffness of a melted polyamide resin by melt kneading, and the surface condition of the molded polyamide resin article can be smoother by air cooling.

[Summary]

The polyamide resin composition according to an embodiment of the present invention includes: a polyamide having a structural unit containing an alkylene group having 1 to 3 carbon atoms and an amide bond; and a compound ("cyclic carbodiimide") having a cyclic structure in which first nitrogen and second nitrogen of a carbodiimide group are bonded by a bonding group. According to the present embodiment, this configuration can suppress a decrease in molecular weight in molding of polyamide 4.

The cyclic carbodiimide described above may be a compound represented by General Formula (I) described above. This configuration is more effective, from the perspective of suppressing the decrease in molecular weight of the polyamide resin composition obtained by molding the polyamide resin composition through melt processing.

In the embodiment of the present invention, the incorporation of 5 mass% or less of the cyclic carbodiimide described above in the polyamide resin composition is more effective, from the perspective of sufficiently expressing the properties of the polyamide in the molded polyamide resin article.

Furthermore, the incorporation of 0.1 mass% or greater of the cyclic carbodiimide in the polyamide resin composition is more effective, from the perspective of enhancing the stiffness of the melted polyamide resin.

The molded polyamide resin article according to the embodiment of the present invention is obtained by melt processing the polyamide resin composition. According to this embodiment, it is possible to suppress the decrease in molecular weight of the molded article in molding of the polyamide.

In the molded polyamide resin article according to the embodiment of the present invention, the melt processing includes melt kneading of the polyamide resin composition. This configuration is more effective, from the perspective of enhancing mechanical properties of the molded polyamide resin article.

The molded polyamide resin article according to the embodiment of the present invention may be a monofilament. This configuration is more effective, from the perspective of producing filaments and fibers having the properties of the polyamide such as biodegradability.

Furthermore, the branching parameter value of the molded polyamide resin article may be 1 or less. This configuration is more effective, from the perspective of expressing the stiffness in a molten state during production of the molded polyamide resin article.

Additionally, according to this configuration in which the molded polyamide resin article is a monofilament, and the arithmetic mean roughness thereof may be 1.0 μm or less, it is possible to provide a monofilament having a more preferred appearance and having a higher strength as a form of the molded polyamide resin article.

The method for producing a molded polyamide resin article according to the embodiment of the present invention includes melt processing the polyamide resin composition. According to this configuration, it is possible to suppress the decrease in molecular weight in molding of a relatively small polyamide such as polyamide 4.

In the melt processing described above, melt kneading may be performed at 260°C or higher and 320°C or lower. This configuration is more effective, from the perspective of obtaining a molded polyamide resin article having high mechanical properties.

The method for producing a molded polyamide resin article described above may further include transporting a melt kneaded product of the polyamide resin composition using a gear pump. This configuration is more effective, from the perspective of enhancing quality stability of the molded polyamide resin article.

The method for producing a molded polyamide resin article described above may further include spinning the melt kneaded polyamide resin composition. This configuration is effective, from the perspective of obtaining a monofilament as the molded polyamide resin article.

The method for producing a molded polyamide resin article described above may further include air cooling the filament produced in the spinning. This configuration is more effective, from the perspective of obtaining a filament having a smooth surface.

The present invention is not limited to the above-described embodiments, and various modifications can be made within the scope of the claims, and embodiments obtained by appropriately combining technical means disclosed in different embodiments are also included in the technical scope of the present invention.

Examples

An embodiment of the present invention will be described below.

[Example 1]

A polyamide resin composition 1 was prepared by adding 1 mass% of a cyclic carbodiimide (trade name: TCC-NP, TEIJIN LIMITED) to polyamide 4 (weight average molecular weight Mw: 156660) and mixing them. From the device analysis result of the cyclic carbodiimide, it is presumed that the cyclic carbodiimide has a structure represented by Formula (III) described above.

The obtained polyamide resin composition 1 was press molded for 2 minutes under conditions of 270°C and a pressure of 5 MPa, and the obtained press molded article was cooled at 20°C under a condition without pressure, thereby obtaining a plate-shaped molded article 1.

The Mw of the molded article 1 and the monomer content of the polyamide 4 were measured. The result showed that the Mw of the molded article 1 was 154180, and the monomer content of the polyamide 4 was 2.4 mass%.

Note that the Mw of the molded article 1 was measured by the following method.

The molded article 1 was dissolved in a hexafluoroisopropanol (HFIP) solution in which sodium trifluoroacetate was dissolved at a concentration of 5 mM, and the volume of the resulting solution was adjusted to 10 mL. The resulting solution was filtered through a membrane filter to obtain a sample solution, and 10 $\mu$L of the sample solution was injected into a GPC measurement apparatus for measurement. The Mw measurement conditions by the GPC measurement apparatus will be indicated below. Measurement apparatus: SHODEX GPC-104 (Showa Denko K.K.) Column: HFIP606M (two connected in series), available from Showa Denko K. K.

Column temperature: 40°C
Detector: RI
Standard substance: polymethyl methacrylate (PMMA)

A gas chromatography (GC) apparatus was used for measuring the monomer content of the polyamide 4 in the molded article 1. Approximately 100 mg of a sample was dissolved in 10 mL of hexafluoro color propyl alcohol (HFIP), and acetone was added to attain 50 mL of a liquid. Thereafter, a filtrate obtained by filtering the liquid through a 20-$\mu$m membrane filter and removing the precipitated polymer was used as a sample solution. The sample solution was used to perform measurement under the following conditions.

Measurement apparatus: GC-2010 Plus available from Shimadzu Corporation
Column: RESTEK Rix (trade name) 15MS (0.25 mm $\alpha$-15 m-0.25 $\mu$m df) Column temperature: 50°C-5 min $\rightarrow$ (20°C/min) $\rightarrow$ 250°C
Vaporization chamber temperature: 250°C
Detector: FID
Split ratio: 50

Injection amount: 1 μL
Make up gas: He
Gas flow rate: 30 mL/min

The branching parameter (g value) of the molded article 1 was measured. More specifically, the mean square radii of gyration of the cyclic carbodiimide-containing polyamide composition containing a branched polymer and the polyamide resin as a linear polymer were measured under the following conditions, and the g values were determined from the following equation using the measured mean square radii of gyration. In the following equation, the "$<S^2>_{branched}$" refers to the mean square radius of gyration of the cyclic carbodiimide-containing polyamide composition containing a branched polymer, i.e., the polymer after processing such as the molded article 1, and the "$<S^2>_{linear}$" is the mean square radius of gyration of the polyamide resin, which is a linear polymer. A raw material PA4 polymer prior to processing was used as the linear polymer. The g value of the molded article 1 was 0.7.

[Analyzer]

GPC apparatus: HLC-8420 GPC, available from TOSOH CORPORATION

[Measurement conditions]

A) Column: GPC HFIP806M × 2 (connected in series), available from Shoko Science Co., Ltd.
B) Eluent: 5 mM CF3COONa/HFIP
C) MALS: DAWN HELEOS 2, available from Wyatt Technology Co.
D) 10 to 11 mg of sample/5 mM $CF_3COONa$/10 mL of HFIP
E) Flow rate: 1.0 mL/min
F) dn/dc: 0.240

(Equation 2)

$$g = \langle S^2 \rangle_{branched} / \langle S^2 \rangle_{linear}$$

[Example 2]

A polyamide resin composition 2 was prepared in the same manner as in Example 1 except that 5 mass% of the cyclic carbodiimide was added. A molded article 2 was produced, and the Mw and monomer content thereof were measured. The Mw of the molded article 2 was 207250, the g value of the molded article 2 was 0.6, and the monomer content of the polyamide 4 in the molded article 2 was 3.8 mass%.

[Example 3]

A polyamide resin composition 3 was prepared in the same manner as in Example 1 except that 10 mass% of the cyclic carbodiimide was added. A molded article 3 was produced, and the Mw and monomer content thereof were measured. The Mw of the molded article 3 was 237170, the g value of the molded article 3 was 0.6, and the monomer content of the polyamide 4 in the molded article 3 was 1.7 mass%.

[Comparative Example 1]

A polyamide resin composition 4 was prepared in the same manner as in Example 1 except that no cyclic carbodiimide was added. A molded article 4 was produced, and the Mw and monomer content thereof were measured. The Mw of the molded article 4 was 70660, the g value of the molded article 4 was 1.0, and the monomer content of the polyamide 4 in the molded article 4 was 2.6 mass%.

[Comparative Example 2]

A polyamide resin composition 5 was prepared in the same manner as in Example 1 except that dicyclohexylcarbodiimide was used instead of the cyclic carbodiimide. A molded article 5 was produced, and the Mw and monomer content thereof were measured. The Mw of the molded article 5 was 77830, the g value of the molded article 5 was 1.0, and the monomer content of the polyamide 4 in the molded article 5 was 2.1 mass%.

Comparative Example 3

A polyamide resin composition 6 was prepared in the same manner as in Example 1 except that polyamide 6 (weight average molecular weight Mw: 61670) was used instead of the polyamide 4. A molded article 6 was produced, and the Mw and monomer content thereof were measured. The Mw of the molded article 6 was 120250, and the g value of the molded article 6 was 0.6.

The raw materials for the polyamide resin compositions 1 to 5 and the Mws and monomer contents of the molded articles 1 to 5 are listed in Table 1 below. Note that the "PA" in the table represents a polyamide, i.e., polyamide 4 in Examples 1 to 3 and Comparative Examples 1 and 2 and polyamide 6 in Comparative Example 3. The "Cyclic CDI" represents a cyclic carbodiimide, the "DCC" represents dicyclohexylcarbodiimide. Also, the "Cm" represents a monomer content.

[Table 1]

Table 1

| | | Example 1 | Example 2 | Example 3 | Comparative Example 1 | Comparative Example 2 | Comparative Example 3 |
|---|---|---|---|---|---|---|---|
| Composition (part by mass) | PA | 100 | 100 | 100 | 100 | 100 | 100 |
| | Cyclic CDI | 1 | 5 | 10 | - | - | 1 |
| | DCC | - | - | - | - | 1 | - |
| Mw (-) | | 154180 | 207250 | 237170 | 70660 | 77830 | 120250 |
| g value (-) | | 0.7 | 0.6 | 0.6 | 1.0 | 1.0 | 0.6 |
| Cm (mass%) | | 2.4 | 3.8 | 1.7 | 2.6 | 2.1 | 2.4 |

[Discussion]

As is clear from Table 1, each of the molded articles 1 to 3 had a Mw equal to or greater than the Mw of the polyamide 4.

Furthermore, according to the measurement of the biodegradability of the molded article 1, the molded article 1 was shown to have a substantially equivalent biodegradability to that of the molded article of the polyamide 4. This is presumed to be because, due to a sufficient and appropriate cyclic carbodiimide content of the polyamide resin composition, the decomposition of the polyamide 4 during molding is sufficiently suppressed, and the physical properties of the polyamide 4 are sufficiently expressed.

Also, each of the molded articles 2 and 3 had a sufficiently higher Mw than the Mw of the polyamide 4. The molded articles 2 and 3 were shown to have a higher mechanical strength than that of the molded article of polyamide 4, according to the measurement of their tensile strength. This is presumed to be because, due to the fact that the cyclic carbodiimide forms a three-dimensional structure having sufficient density during molding, the decomposition of the polyamide 4 during molding is sufficiently suppressed and the three-dimensional structure imparts sufficient strength to the molded article.

In contrast, the Mw of each of the molded articles 4 and 5 was lower than the Mw of the polyamide 4. This is presumed to be because, for the molded article 4, the polyamide resin composition contains no carbodiimide compound, and thus the effects as described above by virtue of the reaction product of the carbodiimide compound are not expressed. This is presumed that, for the molded article 5, the polyamide resin composition contains no cyclic carbodiimide, and thus the sufficient amount of three-dimensional structure is not formed, and the effects as described above by virtue of

the reaction product of the carbodiimide compound are not expressed.

[Production of monofilament]

The polyamide resin composition 1 was used as a material for spin processing to perform spinning, and a monofilament 1 having a filament diameter of 360 μm was produced. Melt kneading and spin processing were performed at 265°C. The melt kneading was performed by a twin screw kneading extruder. Furthermore, the spin processing was performed by acquiring un-drawn fibers discharged from a nozzle of the extruder, and then drawing the fibers by a roller drawing machine. The Mw, arithmetic mean roughness, and tensile strength of the monofilament 1 were measured. The arithmetic mean roughness was measured using a contact type surface roughness meter with an evaluation length of 5 mm, a stylus having a tip radius of 2 μm, and a measurement force of 0.75 mN, and at a measurement speed of 1.0 mm/s. The tensile strength was measured using a tensile testing machine, with a sample length of 10 mm at a tensile speed of 100 mm/min. The results are shown in Table 2. In Table 2, the "$C_{CDI}$" represents a cyclic CDI content, the "Sa" represents an arithmetic mean roughness, and the "St" represents a tensile strength.

[Table 2]

Table 2

| Monofilament | Cooling method | $C_{CDI}$ [part by mass] | Mw [-] | Sa [μm] | St [GPa] |
|---|---|---|---|---|---|
| 1 | Air cooling | 1 | 179000 | 0.2 | 0.57 |
| 2 | Air cooling | 0 | 82000 | - | - |
| 3 | Water cooling | 0 | 82000 | 1.2 | 0.50 |

The monofilament 1 had a smooth surface and thus had good surface properties. It also had a sufficiently high tensile strength.

The production of a monofilament 2 was attempted in the same manner as for the monofilament 1 except that the polyamide resin composition 4 was used instead of the polyamide resin composition 1. However, significant draw-down of un-drawn fibers occurred, and spinning was not possible. This is presumed to be because the polyamide resin composition 4 contains no cyclic carbodiimide, and thus the molten product has no stiffness such that the molten product can be spin processed under air cooling.

Additionally, a monofilament 3 was produced in the same manner as for the monofilament 1 except that the polyamide resin composition 4 was used instead of the polyamide resin composition 1, and further the un-drawn fibers were not cooled by air, but cooled by water. The monofilament 3 had surface roughness and a low tensile strength. This is presumed to be because the surface condition became rough due to water cooling, and the tensile strength was lowered due to generation of a vacuum void.

Also, the production of a monofilament 6 was attempted in the same manner as for the monofilament 1 except that the polyamide resin composition 6 was used instead of the polyamide resin composition 1. However, the melt kneaded product of the polyamide resin composition 6 was not discharged from the nozzle, and thus spinning could not be performed. This is presumed to be because the g value for PA6 was too low, and the viscosity of the melt kneaded product was so high that the melt kneaded product could not be discharged from the nozzle.

[Production of monofilament using gear pump]

A polyamide resin composition 7 was prepared by mixing 100 parts by mass of the polyamide 4 and 2.5 parts by mass of the cyclic CDI described above. The polyamide resin composition 7 was used as a material for spinning to perform spinning, and a monofilament 7 was produced. The monofilament 7 was produced using an apparatus similar to that for the monofilament 1 except that the apparatus included a gear pump as a transport apparatus for melt kneaded products. The results are shown in Table 3. The monofilament 7 had good surface properties similarly to the monofilament, and can be produced as a good product also in a spinning apparatus using a gear pump.

[Table 3]

Table 3

| Monofilament | $C_{CDI}$ [part by mass] | Mw [-] | Spinnability |
|---|---|---|---|
| 7 | 2.5 | 230000 | Good |
| 8 | 0 | 79000 | Not possible |

The production of a monofilament 8 was attempted in the same manner as for the monofilament 7 except that the polyamide resin composition 4 was used instead of the polyamide resin composition 7. However, the un-drawn fibers were significantly decomposed, and spinning was not possible. This is presumed to be because the polyamide resin composition 4 contains no cyclic CDI, and thus thermal history when the molten resin passes through a path of the gear pump is increased, leading to significant decomposition.

Industrial Applicability

The present invention can suppress a decrease in molecular weight of a molded article of a polyamide. Therefore, it is expected to be used for molded articles having both mechanical strength and properties of the polyamide and giving a smaller environmental burden.

## Claims

1. A polyamide resin composition comprising:

   a polyamide having a structural unit containing an alkylene group having 1 to 3 carbon atoms and an amide bond; and
   a compound having a cyclic structure in which first nitrogen and second nitrogen of a carbodiimide group are bonded by a bonding group.

2. The polyamide resin composition according to claim 1, wherein the compound is represented by General Formula (I):

   [Formula 1]

   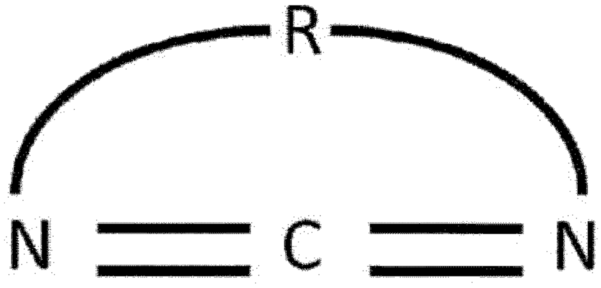

   (I)

   where R is one or more divalent bonding groups selected from the group consisting of aliphatic groups, alicyclic groups, and aromatic groups, and may contain one or more heteroatoms.

3. The polyamide resin composition according to claim 1 or 2, wherein the compound is contained in an amount of 5 mass% or less.

4. The polyamide resin composition according to claim 1 or 2, wherein the compound is contained in an amount of 0.1 mass% or greater.

5. A molded polyamide resin article obtained by melt processing the polyamide resin composition described in any one of claims 1 to 4.

6. The molded polyamide resin article according to claim 5, wherein the melt processing includes melt kneading of the polyamide resin composition.

7. The molded polyamide resin article according to claim 5 or 6, wherein the molded polyamide resin article is a monofilament.

8. The molded polyamide resin article according to any one of claims 5 to 7, wherein the molded polyamide resin article has a branching parameter value of 1 or less.

9. The molded polyamide resin article according to any one of claims 5 to 8, wherein the molded polyamide resin article is a monofilament having an arithmetic mean roughness of 1.0 μm or less.

10. A method for producing a molded polyamide resin article, comprising melt processing the polyamide resin composition described in any one of claims 1 to 4.

11. The method for producing a molded polyamide resin article according to claim 10, wherein the melt processing includes melt kneading the polyamide resin composition at 250°C or higher and 320°C or lower.

12. The method for producing a molded polyamide resin article according to claim 11, further comprising transporting the melt kneaded polyamide resin composition using a gear pump.

13. The method for producing a molded polyamide resin article according to claim 12, further comprising spinning the melt kneaded polyamide resin composition.

14. The method for producing a molded polyamide resin article according to claim 13, further comprising air cooling a filament produced in the spinning.

**INTERNATIONAL SEARCH REPORT**

International application No. PCT/JP2021/020680

A. CLASSIFICATION OF SUBJECT MATTER
Int.Cl. C08G69/48(2006.01)i, C08K5/29(2006.01)i, C08L77/02(2006.01)i, D01F6/60(2006.01)i
FI: C08L77/02, C08K5/29, D01F6/60311K, D01F6/60341B, C08G69/48
According to International Patent Classification (IPC) or to both national classification and IPC

B. FIELDS SEARCHED
Minimum documentation searched (classification system followed by classification symbols)
Int.Cl. C08G69/48, C08K5/29, C08L77/02, D01F6/60

Documentation searched other than minimum documentation to the extent that such documents are included in the fields searched

| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)
CAplus/REGISTRY(STN)JSTPlus(JDreamIII), JST7580(JDreamIII), JSTChina(JDreamIII)

C. DOCUMENTS CONSIDERED TO BE RELEVANT

| Category* | Citation of document, with indication, where appropriate, of the relevant passages | Relevant to claim No. |
|---|---|---|
| A | JP 2013-60486 A (NATIONAL INSTITUTE OF ADVANCED INDUSTRIAL SCIENCE & TECHNOLOGY) 04 April 2013 (2013-04-04) | 1-14 |
| A | 庄司信一郎, 新規環状カルボジイミドの開発, 高分子, 2013, vol. 62, no. 12, pp. 737, 738, ISSN: 0454-1138, entire text, (SHOJI, Shinichiro, Development of novel syclic carbodiimide, Polymers) | 1-14 |
| A | JP 2011-153209 A (TEIJIN LTD.) 11 August 2011 (2011-08-11) | 1-14 |
| A | JP 2012-1594 A (TEIJIN LTD.) 05 January 2012 (2012-01-05) | 1-14 |
| A | JP 2018-502206 A (ARKEMA FRANCE) 25 January 2018 (2018-01-25) | 1-14 |

☐ Further documents are listed in the continuation of Box C. ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 06 July 2021 | 20 July 2021 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**
Information on patent family members

International application No.
PCT/JP2021/020680

| | | |
|---|---|---|
| JP 2013-60486 A | 04 April 2013 | (Family: none) |
| JP 2011-153209 A | 11 August 2011 | US 2012/0302676 A1<br>WO 2011/093478 A1<br>EP 2530111 A1<br>AU 2011211260 A<br>CA 2786665 A<br>TW 201141927 A<br>SG 182593 A<br>CN 102812072 A<br>KR 10-2012-0123688 A<br>RU 2012136467 A<br>BR 112012018682 A |
| JP 2012-1594 A | 05 January 2012 | WO 2011/158884 A1<br>TW 201211148 A |
| JP 2018-502206 A | 25 January 2018 | US 2017/0313843 A1<br>WO 2016/071638 A1<br>EP 3215562 A1<br>FR 3027907 A<br>KR 10-2017-0082555 A<br>CN 107075247 A<br>BR 112017008483 A |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2013060486 A
- JP 2010285557 A